Europäisches Patentamt

(19) European Patent Office

Office européen des brevets

(11) Publication number: **0 453 208 A2**

## (12) EUROPEAN PATENT APPLICATION

(21) Application number: 91303297.5

(22) Date of filing: 15.04.91

(51) Int. Cl.⁵: **B26D 3/08**, B26D 1/60, B26D 7/27, B23P 19/04, B29C 67/18, B29D 23/22

(30) Priority: 17.04.90 GB 9008516

(43) Date of publication of application:
23.10.91 Bulletin 91/43

(84) Designated Contracting States:
BE DE DK ES FR GB IT NL

(71) Applicant: VICTAULIC PLC
P.O. Box 13 46-48 Wilbury Way
Hitchin Hertfordshire SG4 0AP (GB)

(72) Inventor: Ramscar, Alan Thomas
7 Denbigh Road
Langlands, Northampton (GB)

(74) Representative: Heath, Peter William Murray
et al
FRY HEATH & CO. St. Georges House 6
Yattendon Road
Horley Surrey RH6 7BS (GB)

(54) Incising tools and methods of their use.

(57) An incising tool (1) for forming a helical incision around the internal surface of a hollow sleeve member (3) comprises a carrier member (2) arranged for insertion into the hollow member (3) to lie adjacent to the internal surface thereof to be cut; a housing (6) mounted upon the carrier member (2) and carrying a rotatable shaft (10) arranged to be inclined in use to the axis (7) of the sleeve member (3), the shaft (10) supporting at or adjacent one end thereof a rotatable incision wheel (11) disposed normal to the rotational axis (12) of the shaft (10), the incision wheel (11) having around its periphery a groove (13) for the receipt of an electrical heating wire (14); and wire guide means (15,16) for guiding electrical heating wire via the carrier member (2) onto the incision wheel (11). In use, upon insertion of the carrier member (2) into the end of the sleeve member (3) of thermoplastic material, and making pressing engagement of the incision wheel (11) with the internal surface of the sleeve member (3), and upon relative rotational and axial movement between the carrier member (2) and the sleeve member (3), the incision wheel (11) (carrying with it the electrical heating wire (14)) forms by rolling an incision (17) into the sleeve member (3) of helical nature inclined to the axis (7) of the sleeve member (3) within which the electrical wire (14) is laid as the incision wheel (11) rotates.

FIG.1.

This invention relates to incising tools and methods of their use. More particularly, the invention relates to tools for making a helical incision around the inner surface of hollow bodies, such as tubular hollow bodies, and methods of use of such tools.

Such tools have been proposed in which a cutting blade is mounted on a shaft arranged to project within the hollow body parallel to the axis thereof, the cutting blade projecting outwardly from the shaft so as to impinge upon the internal surface of the hollow member. Appropriate axial and radial relative movement between the shaft and the member to be cut then results in the formation of a helical incision. Usually, the relevant movement is caused by rotating the hollow member with the cutting blade engaging the internal surface of the body at the same time axially moving the shaft carrying the cutting blade.

Such a helical incision operation is required, for example, in the production of electrofusion couplings for thermoplastic pipes, in which an electric heating wire, embedded in the sleeve, is utilised, by the passage of electrical current therethrough, to fuse the sleeve to the end of a thermoplastic pipe located therewithin. In this case, a sleeve of thermoplastic material is provided with a heating wire inserted in helical fashion within the internal surface thereof. The insertion of the wire can be achieved by incising a helical cut or groove around the internal surface of the sleeve and then inserting the heating wire into the cut or groove so formed. Couplings of this kind can utilise a sleeve with a wide range of sizes from, say 20mm internal diameter up to, say, 200mm internal diameter or larger.

It is an object of the present invention to provide such a tool and a method of its use, having a simple and effective performance.

In accordance with one aspect of the present invention, there is provided an incising tool for forming a helical incision around the internal surface of a hollow sleeve member characterised by a carrier member adapted for insertion into the hollow member to lie adjacent the internal surface thereof to be cut; a housing mounted upon the carrier member and carrying a rotatable shaft arranged to be inclined in use to the axis of the sleeve member, the shaft supporting at or adjacent one end thereof a rotatable incision wheel disposed normal to the rotational axis of the shaft, the incision wheel having around its periphery a groove for the receipt of an electrical heating wire; and wire guide means for guiding electrical heating wire via the carrier member onto the incision wheel such that, in use, upon insertion of the carrier member into the end of a sleeve of thermoplastic material, and making pressing engagement of the incision wheel with the internal surface of the sleeve, and upon relative rotational and axial movement between the carrier member and the sleeve member, the incision wheel (carrying with it the electrical heating wire) forms by rolling an incision into the sleeve member of helical nature inclined to the axis of the sleeve member within which the electrical wire is laid as and the incision wheel rotates.

In accordance with another aspect of the present invention, there is provided a method of forming a helical incision around the internal surface of a hollow sleeve member comprising mounting the sleeve alongside the incising tool as hereinabove defined, inserting the carrier member of the tool into the hollow member so as to lie adjacent the internal surface of thereof to be cut, feeding electrical heating wire via the wire guide means onto the incision wheel, pressing the incision wheel into engagement with the internal surface of the sleeve member and then causing the carrier member and the sleeve member to move in relative rotational and axial movement, whereby the incision wheel, carrying the electrical heating wire, forms by rolling an incision into the sleeve member of helical nature inclined to the axis of the sleeve member within which the electrical wire is at the same time laid as the incision wheel rotates.

The housing may comprise a hollow body within which the shaft is located and carried on bearings.

The incision wheel may have a thickness dimension corresponding to the diameter of the electrical heating wire to be laid into the sleeve, in which case the groove around the periphery of the incision wheel may be approximately semi-circular in section extending across the thickness of the wheel so as to accommodate within it a quantity approaching one half of the volume of the wire disposed therearound. By such an arrangement, the incision wheel with the electrical heating wire disposed therein forms a rolling disc having a smoothly semi-circular edge section for incising into the surface of the sleeve.

The relative rotational and axial movement between the carrier member and the sleeve may be by both rotational and axial movement of the sleeve, or may, for example, be by way of rotational movement of the sleeve combined with axial movement of the incising tool.

Whilst in some embodiments the incision wheel may be arranged to be driven in its rotation within the sleeve so that its periphery is, relative to the base of the incision it forms, stationery during relative rotation between the carrier member and the sleeve, in a preferred embodiment the incision wheel, and the shaft upon which it is secured, are freely rotatable so as to be turned solely by the engagement between the incision wheel and the internal surface of the sleeve upon relative rotation between the carrier member and the sleeve.

In order that the invention may be more readily understood, one embodiment thereof will now be described by way of example with reference to the accompanying drawings, in which:-

Figure 1 is a schematic side elevation, partly in section, of an incising tool in accordance with the invention in use; and

Figure 2 is a sectional elevation on an enlarged scale showing the incising operation of the tool of Figure 1.

Referring now to the drawings, it will be seen that the incising tool 1 comprises a carrier member 2 disposed for insertion into a thermoplastics sleeve 3 of an electrofusion pipe coupling member.

The carrier member essentially includes a shaft portion 4 capable of insertion longitudinally and movement longitudinally through the sleeve 3 whilst the sleeve is rotating relative to the shaft axis and an angled hollow portion 5. Secured within the hollow portion 5 is a housing 6 disposed again at an inclined angle of (in the case shown) 65° to the axis 7 of the shaft 4 and sleeve 3.

Mounted within rear thrust bearings 8 and front double race bearings 9, a disposed in the housing 8 is a freely rotatable shaft 10 attached to one end of which is an incision wheel 11. The plane of the wheel 11 is at right angles to the axis 12 of the cutter shaft and is, therefore, at 55° (in this example) to the axis 7 of the sleeve 3 and the internal surface thereof.

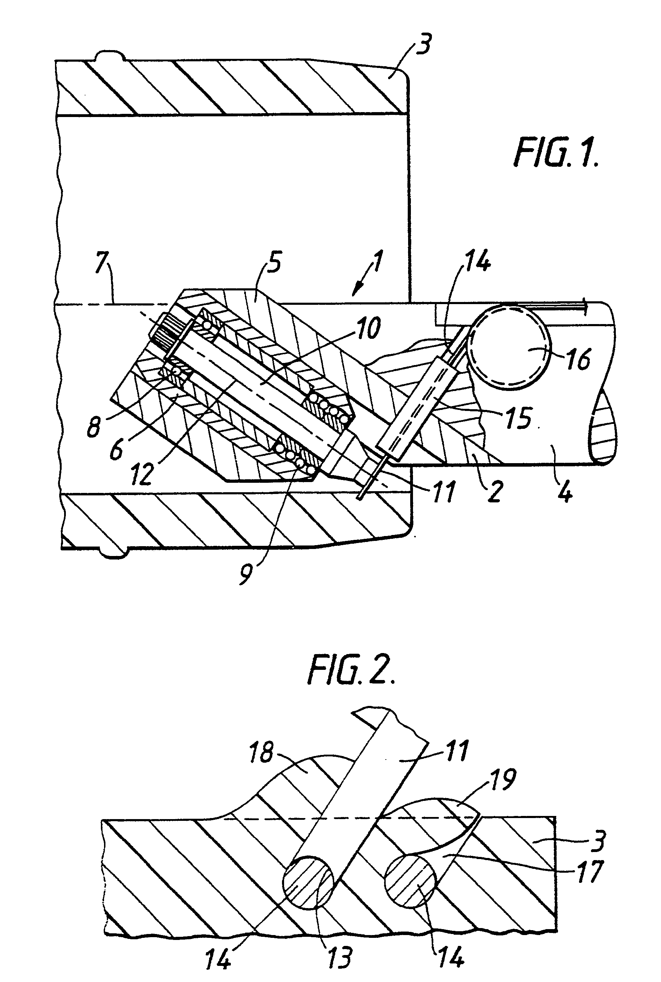

As can be most clearly seen in figure 2, the incision wheel 11 has around its periphery an arcuate groove 13 of generally the same diameter as the thickness of the wheel and as the diameter of an electrical heating wire 14 adapted to be carried therearound. The wire is fed via guides 15, 16 from a supply thereof (not shown) external to the sleeve and onto and around the incision wheel 14.

By virtue of the pressure applied to the sleeve 3 by the incision wheel, the wheel 14 with its superimposed wire 14, forming a disc of semi-circular section edge incises into the surface of the sleeve. Upon rotation of the sleeve 3 about the shaft whilst the portion 4 of the carrier member 2 is moved forward into the sleeve, a helical incision 17 is made in the internal surface of the sleeve within which the wire 14 is simultaneously laid from the outer peripheral groove 13 of the sleeve.

The method of formation of the groove and the laying in of the wire can most clearly be seen in Figure 2. Typically, the wire 14 is 0.66mm in diameter, and the wheel 11 is arranged to penetrate 1.2mm into the sleeve 3 of the coupling. By virtue of the inclined angle of the wheel 11 as it is rolled around the internal surface of the sleeve 3, a flap 18 of material is forced from the internal surface thereof during the formation of the cut, which, as the wheel passes on, tends to lie back and cover over the wire 14 laid in as shown at 19. Such flap 19 can, if desired, subsequently be flattened down upon the internal surface of the sleeve by inserting a heated mandrel, for example, into the sleeve 3 after laying in of all of the heating wire so as to provide a fully covered helical array of heating wire within the sleeve below the internal surface thereof.

By means of the invention a simple and effective means of providing an embedded helical array of heating wire within the sleeve of an electrofusion coupling has been provided.

It is to be understood that the foregoing is merely exemplary of incising tools, and methods of forming a helical groove around the internal surface of a hollow sleeve member in accordance with the invention and that modifications can readily be made thereto without departing from the true scope of the invention.

## Claims

1. An incising tool (1) for forming a helical incision around the internal surface of a hollow sleeve member (3) characterised by a carrier member (2) arranged for insertion into the hollow member (3) to lie adjacent to the internal surface thereof to be cut; a housing (6) mounted upon the carrier member (2) and carrying a rotatable shaft (10) arranged to be inclined in use to the axis (7) of the sleeve member (3), the shaft (10) supporting at or adjacent one end thereof a rotatable incision wheel (11) disposed normal to the rotational axis (12) of the shaft (10), the incision wheel (11) having around its periphery a groove (13) for the receipt of an electrical heating wire (14); and wire guide means (15,16) for guiding electrical heating wire via the carrier member (2) onto the incision wheel (11) such that, in use, upon insertion of the carrier member (2) into the end of the sleeve member (3) of thermoplastic material, and making pressing engagement of the incision wheel (11) with the internal surface of the sleeve member (3), and upon relative rotational and axial movement between the carrier member (2) and the sleeve member (3), the incision wheel (11) (carrying with it the electrical heating wire (14)) forms by rolling an incision (17) into the sleeve member (3) of helical nature inclined to the axis (7) of the sleeve member (3) within which the electrical wire (14) is laid as the incision wheel (11) rotates.

2. An incising tool (1) as claimed in claim 1 characterised in that the housing (6) comprises a hollow body, the shaft (10) being located therewithin carried on bearings (8,9).

3. An incising tool (1) as claimed in claim 1 or 2 characterised in that the incision wheel (11) has a thickness dimension corresponding generally to the diameter of the electrical heating wire (14) to be laid into the sleeve (3).

4. An incising tool (1) as claimed in claim 3 characterised in that the groove (13) around the periphery of the incision wheel (14) is approximately semi-circular in section extending across the thickness of the wheel (14) so as to accommodate within it a quantity approximately of one half of the wire (14) disposed, in use, therearound.

5. An incising tool (1) as claimed in any one of the preceding claims characterised in that the incision wheel (14) is undriven and freely rotatable.

6. A method of forming a helical incision around the internal surface of a hollow sleeve member by means of an incising tool comprising a housing mounted upon the carrier member and carrying a rotatable shaft arranged to be inclined in use to the axis of the sleeve member, the shaft supporting at or adjacent one end thereof a rotatable incision wheel disposed normal to the rotational axis of the shaft, the incision wheel having round its periphery a groove for the receipt of an electrical heating wire; and wire guide means for guiding electrical heating wire via the carrier member onto the incision wheel; characterised by mounting the sleeve alongside the incising tool, inserting the carrier member of the tool into the hollow member so as to lie adjacent the internal surface thereof to be incised, feeding electrical heating wire via the wire guide means onto the incision wheel, pressing the incision wheel into engagement with the internal surface of the sleeve member and then causing the carrier member and the sleeve member to move in relative rotational and axial movement, whereby the incision wheel, carrying the electrical heating wire, forms by rolling an incision into the sleeve member of helical nature inclined to the axis of the sleeve member within which the electrical wire is at the same time laid as the incision wheel rotates.

7. A method as claimed in claim 6 characterised in that the relative rotational and axial movement between the carrier member and the sleeve is provided by both rotational and axial movement of the sleeve.

8. A method as claimed in claim 6 characterised in that the relative rotational and axial movement between the carrier member and the sleeve is provided by rotational movement of the sleeve combined with axial movement of the incisng tool.

9. A method as claimed in any one of claims 6 to 8 characterised in that the incision wheel is undriven and freely rotatable and is turned by engagement between the incision wheel and the internal surface of the sleeve upon relative rotation between the carrier member and the sleeve.

FIG.1.

FIG.2.